# DEMANDE DE BREVET EUROPEEN

(11) **EP 0 720 308 A1**
(43) Date de publication de la demande: **03.07.1996**
(21) Numéro de dépôt: 95402903.9
(22) Date de dépôt: 21.12.1995
(51) Int. Cl.: H04B 7/204

(54) **Procédé et système de transmission de signaux radioélectriques via un réseau de satellites entre une station terrestre fixe et des terminaux mobiles d'usagers**

(30) Priorité: 02.01.1995 FR 9500008
(71) Demandeur: AGENCE SPATIALE EUROPEENNE, F-75015 Paris (FR)
(72) Inventeur: Bella, Luigi, NL-Noordwijk-aan-Zee (NL); Besso, Piermario, IT-10017 Montanaro (IT); Landucci, Daniele, IT-55100 Lucca (IT); Pennoni, Giovanni, IT-40127 Bologna (IT); Romano, Giovanni, IT-10090 San Giorgio Canavese (IT)
(74) Mandataire: Lepercque, Jean

(57) **Abrégé**

L'invention concerne un procédé et un système de transmission de signaux radioélectriques entre une station terrestre fixe (ST₁) et des terminaux d'usagers mobiles (T₁, T₂), via un réseau de satellites (Sat₁), en orbites circulaires inclinées et de rayon inférieur à celui des orbites géostationnaires. Les faisceaux générés sont subdivisés en pinceaux (p₁, p₂₀), chacun étant associé à une sous-bande de fréquences (F₁, F₂₀). Celles-ci étant réparties de façon continue, croissante ou décroissante. La fréquence de transmission instantannée est décalée progressivement, pendant la durée de la communication, vers la sous-bande de fréquences (F₂) du pinceau adjacent, à un rythme proportionnel à la vitesse de rotation, de manière à permettre des commutations inter-pinceaux ou inter-satellites.

Application aux transmissions par satellites en orbite non-géostationnaires.

## Description

La présente invention concerne un procédé de transmission de signaux radioélectrique via un réseau de satellites entre une station terrestre fixe et des terminaux mobiles d'usagers.

Elle concerne également un système de transmission mettant en oeuvre le procédé.

Selon l'invention, par "station terrestre fixe", il faut entendre une station terminale de trafic internationale, ou une installation similaire ; cette dernière pouvant elle-même être reliée à des réseaux terrestres de communication et/ou à d'autres stations du même type, par voie terrestre ou par liaison satellite.

De même, le terme "terminal mobile" englobe de nombreux type de terminaux, en particulier des terminaux portables, par exemple du type dit "pager", selon la terminologie anglo-saxonne.

On connaît de nombreux systèmes de communication par satellite, soit pour des services mobiles, soit pour des services fixes. De façon générale, les voies suivies ont été très divergentes selon que l'on considère un type ou l'autre de ces services, que ce soit en termes de bandes de fréquences (bande L ou S dans un cas, C, Ku ou Ka dans l'autre cas), de capacité (quelques Mbits/s, dans un cas, des centaines de Mbits/s dans l'autre cas), de couverture (global ou régional, dans un cas, global par illumination ponctuelle, régional ou national, dans l'autre cas) ou en taille et capacité de terminaux (de 1 mètre à quelques centimètres avec un débit de données de quelques kbits/s, dans un cas, de 17 mètres à 1 mètres avec un débit de données de l'ordre de quelques Mbits/s à quelques centaines de Mbits/s).

Récemment, la tendance pour les réseaux de satellites destinés aux services mobiles est qu'ils soient constitués de satellites lancés sur des orbites basses (dites "LEO") ou moyennes (dites "MEO"). Ces satellites sont capables de desservir des terminaux portables à l'aide d'antenne omnidirectionnelles, généralement pour des transmissions vocales très fortement compressées. Par contre, les réseaux satellites destinés aux services fixes restent à base de satellites lancés sur des orbites géostationnaires (dites "GEO"). Ils sont destinés plus particulièrement au trafic interurbain ou privé (réseaux loués) par réseaux à haut débit.

La partie "bas débit" du marché des communications par satellites (antennes paraboliques de moins d'un mètre de diamètre) est concernée par des valises portables et un effort important a été réalisé en faveur de terminaux portables bon marché. Cependant ce segment de marché laisse vierge un segment plus performant de terminaux mobiles, c'est-à-dire des terminaux portables large bande. De plus en plus, un besoin se fait sentir pour ce marché, situé entre les services traditionnels "fixes" et "mobiles" de communication par satellite. Ce nouveau marché paraît également pouvoir répondre à de nouvelles exigences pour des "communications mobiles large bande". Or, il est bien connu que les réseaux cellulaires terrestres, du moins à court terme, ne pourront offrir des débits de communication supérieurs à 16 kbits/s.

On peut également penser à des application de téléphonie ou de télécopie à l'aide de terminaux performants, par exemple dans les contrées éloignées dépourvues d'infrastructure terrestres suffisantes : "mini-noeud" de communication, etc.

Il est donc nécessaire de développer un système de communication par satellite, à couverture mondiale, nécessitant un investissement initial raisonnable, mais qui offre des performances de haut niveau ( débit de données typique de 64 kbits/s au minimum, faible délai de transmission) pour des terminaux, à antenne dépliable, de la taille d'une calculatrice de poche. En outre, le système ne doit pas nécessiter, avant les mises en opérations, des procédures de coordination longues. Enfin, le système ne doit pas engendrer des interférences avec les autres systèmes de satellites, notamment géostationnaires.

Le procédé et le système selon l'invention visent à résoudre simultanément ces exigences tout en palliant les inconvénients de l'art connu.

Pouf ce faire, la partie "terrestre" du système selon l'invention consiste en un grand nombre de terminaux d'usagers portables large bande et des stations de commande des satellites, de préférence dupliquées.

La partie "espace" consiste en un réseau de satellites sur orbite moyenne ("MEO") qui sont commandés par les stations précités, par l'intermédiaire de stations relais de télémétrie, poursuite et de commande ("TT&C"). Les stations de commande peuvent être mises en liaison avec des stations terminales de trafic international. Les orbites sont circulaires et inclinées, avec une période nodale de 8 heures sidérales (c'est-à-dire à triple synchronisation avec la rotation de la terre). Les satellites du réseau précité répètent systématiquement le même tracé sur au-dessus de la terre chaque 24 heures, comme explicité dans l'article de J. MASS : "Triply Geosynchronous Orbits for Mobile Communications", paru dans "15th AIAA Conference on Communication Satellite Systems"", San Diego, 1994, pages 1220-1226. Les satellites, en nombre minimal de six, mais préférentiellement de sept, doivent en outre satisfaire à un certains nombre de critères supplémentaires comme il le sera montré ci-après.

Les terminaux portables d'usagers peuvent être en mode actif lorsque leurs antennes sont déployées et commandés par une station de commande appropriée au travers d'une "liaison de commande" ou, au contraire, en mode passif. Dans ce mode, ils ne peuvent qu'être appelés (mode dit "paged" selon la terminologie anglo-saxonne).

Selon une caractéristique importante de l'invention, on utilise des antennes à balayage, sur les satellites et dans les terminaux portables. En outre, la bande de fréquence globale est subdivisée, dans des faisceaux étroits, en sous-bandes contiguës, dans un mode de réalisation préféré. Dans ce qui suit, ces faisceaux étroits seront dénommés "pinceaux". On peut donc implanter, dans les terminaux portables, un mode de commutation automatique très simple (sans blocage) entre pinceaux, bien que le satellite soit en mouvement. Il suffit d'effectuer une commande de balayage d'antenne, par exemple un balayage en fréquence, dans un mode de réalisation préféré. Selon ce mode, on fait varier progressivement la fréquence utilisée pour le lien de communication.

La commutation d'un satellite à l'autre, s'effectue selon une méthode similaire. Toujours dans un mode de réalisation préféré, deux satellites consécutifs balayent une même zone de couverture à l'aide de pinceaux dont les sous-bandes de fréquence sont organisées dans un ordre inverse. Cette disposition permet à un terminal donné de rester dans la même sous-bande de fréquence, lors de la transition d'un satellite à l'autre.

Enfin, des mesures sont prises pour éviter, autant que faire ce peut, toute interférence avec des systèmes déjà existant opérant dans les mêmes bandes de fréquence, notamment des systèmes de satellites géostationnaires.

L'invention a donc pour objet un procédé de transmission de signaux radioélectriques via un réseau de satellites entre au moins une station terrestre fixe et des terminaux d'usagers, les satellites étant animés d'un mouvement de rotation autour du globe terrestre sur des orbites circulaires et à vitesse déterminée, les orbites étant inclinées par rapport à l'équateur et de rayon inférieur à celui des orbites géostationnaires, les satellites étant à synchronisation triple avec la rotation du globe terrestre, chaque satellite comprenant un arrangement d'antennes permettant de générer au moins un faisceau à diagramme de rayonnement dirigé vers la surface du globe terrestre et associé à une bande de fréquences de largeur déterminée, caractérisé en ce qu'il comprend au moins les étapes suivantes :
- partition dudit faisceau en un nombre déterminé de pinceaux contigus, chacun étant associé à une sous-bande de fréquences, subdivision de ladite bande passante de largeur déterminée ;
- établissement d'un lien de communication, selon au moins une direction, entre une desdites stations terminales terrestres et un desdits terminaux d'usager, via un desdits satellites du réseau, par utilisation d'une fréquence instantanée de transmission comprise dans une première sous-bande de fréquences associée à un premier pinceau, ce dernier illuminant ledit terminal d'usager à l'instant de survol de celui-ci par ce satellite;
- et décalage progressif de ladite fréquence de transmission instantanée, pendant la durée du lien de communication, vers la sous-bande de fréquences suivante associée au pinceau adjacent et à un rythme proportionnel à ladite vitesse de rotation déterminée, de manière à compenser ledit mouvement et à permettre la poursuite dudit satellite.

L'invention encore pour objet un système transmission de signaux radioélectrique via un réseau de satellites entre une station terrestre fixe mettant en oeuvre le procédé.

Le procédé et le système mettant en oeuvre le procédé permettent donc tout à la fois de réduire le nombre de satellites nécessaires, d'offrir une grande capacité de liaison, notamment en terme de débit, et de réduire la complexité des équipements embarqués et de celle des terminaux portables. Il n'y pas, notamment de nécessité de communications inter-satellites et les procédures de commutations au niveau des terminaux portables sont réduites au minimum.

L'invention sera mieux comprise et d'autres caractéristiques et avantages apparaîtront à la lecture de la description qui suit en référence aux figures annexées, et parmi lesquelles :
- Les figure 1a et 1b illustrent schématiquement une transmission de signaux radioélectriques via un réseau de satellites entre une station terrestre fixe et des terminaux portables, selon le procédé de l'invention ;
- Les figures 2a et 2b illustrent la commutation entre deux satellites consécutifs ;
- La figure 3 illustre un détail des faisceaux de transmissions conformes à l'invention ;
- les figures 4a à 4c illustrent schématiquement un exemple d'arrangement d'antennes de terminaux portables, en positions déployées et repliées, respectivement ;
- Les figures 5a et 5b illustrent deux modes de réception des terminaux mobiles d'usagers ;
- la figure 6 illustre deux exemple de diagrammes d'interférence avec un système de transmission par satellites géostationnaires ;
- La figure 7 est un diagramme illustrant la couverture terrestre d'un exemple de réseau de satellites du système selon l'invention ;
- La figure 8 illustre la variation de fréquence en fonction du temps des signaux reçus au-dessus d'un point fixe du globe terrestre ;
- La figure 9 illustre l'allocation de bandes de fréquences entre usagers selon une variante de réalisation pour laquelle les faisceaux sont virtuels ;
- La figure 10 illustre un exemple d'architecture d'un satellite conforme à l'invention.

Le procédé de l'invention va maintenant être décrit de façon détaillée.

Comme il a été indiqué, la partie terrestre consiste en un grand nombre de terminaux d'usagers portables large bande et des stations de commande des satellites

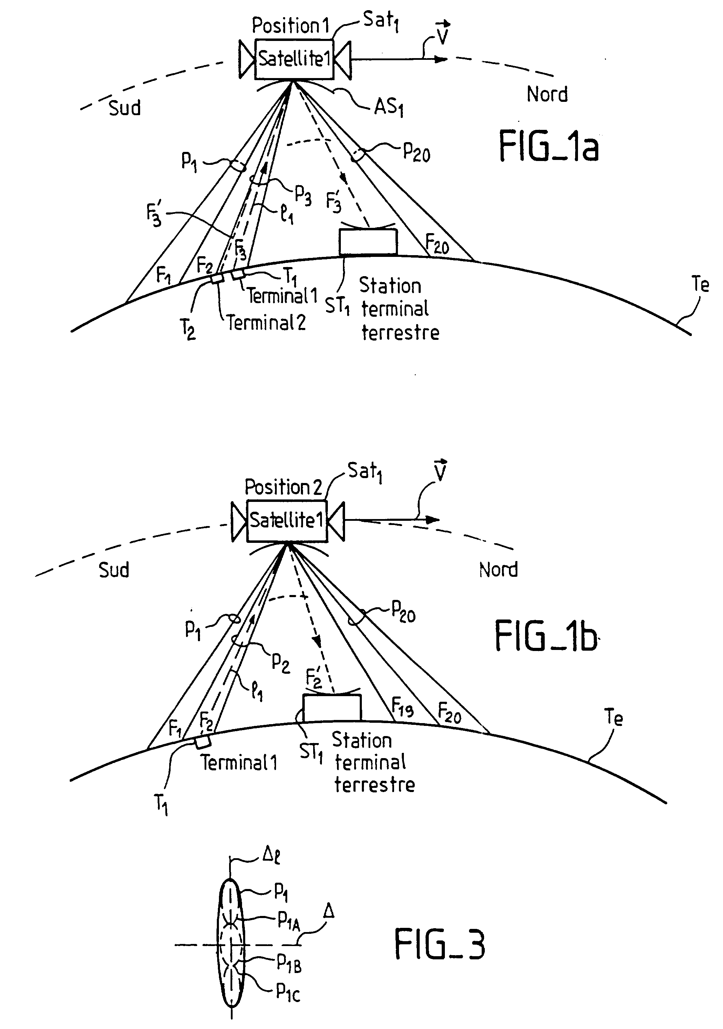

Les figures 1a et 1b illustrent schématiquement la transmission de signaux radioélectriques via un réseau de satellites entre une station terminale terrestre fixe ST₁ et des terminaux d'usagers mobiles, dont deux seulement ont été référencés : T₁ et T₂. Naturellement, le système peut comporter plusieurs stations terrestres. Il comporte également des stations de télécommande, télémétrie et commande. Ces aspects sont bien connus et il est inutile de les décrire plus avant.

Bien que l'on ait représenté un seul satellite Sat₁, il est clair que, pour couvrir une région donnée de la terre en permanence, du fait que les satellites ne soient pas géostationnaires, il est nécessaire de prévoir plusieurs satellites, de préférence six à huit satellites. Les caractéristiques précises des orbites et la couverture terrestre apportée seront explicitées ultérieurement. On rappelle brièvement que les orbites sont circulaires et inclinées avec une période nodale de 8 heures sidérales (synchronisation triple des satellites sur la rotation de la terre). Le même tracé sur la surface terrestre sera répété toutes les 24 heures. Cet aspect est explicité dans l'article précité de J. MASS.

On peut montrer, par ailleurs, que l'on peut obtenir une couverture optimisée des terres émergées si l'on adopte des paramètres d'orbite appropriés, par exemple :
- angle d'inclinaison : 75 ° ;
- noeud ascendant : 30° ;
- Anomalie moyenne : 0° ;

Dans ce cas l'angle de site minimum est compris entre 20° et 30° (pour un réseau de satellites de 6 à 8 unités).

La liaison mobile peut s'effectuer dans les bandes Ku ou Ka. Pour fixer les idées, et sans que cela soit en rien limitatif de la portée de l'invention, il sera supposé dans ce qui suit que l'on opère dans la bande Ka. Les liens de communication, par exemple l₁, sont établis sur demande pour la largeur de bande désirée, par exemple typiquement de 16 kbits/s à 2 Mbits/s entre n'importe quel terminal portable d'usager à l'état actif, par exemple T₁, et une station terrestre de commande appropriée ou station de terminale de trafic internationale, par exemple ST₁. Cette dernière station ST₁ achemine ensuite l'appel au travers d'un réseau public ou privé approprié, de manière à atteindre la destination finale désirée. La station ST₁ établie ensuite l'acheminement inverse des "appels" entrants, au travers des réseaux terrestres, vers les terminaux portables d'usager T₁ ou T₂. Ces terminaux peuvent être connectés entre eux par doubles sauts et un transit (ou plus) par des stations terrestres, par exemple ST₁. Il est à noter que les délais de transit restent cependant inférieurs aux délais admis pour les satellites géostationnaires.

Les voies d' "appels" peuvent être des connexions classiques à base de circuits physiques commutés mais aussi, pour autant que les liens par satellites sont concernés, ces voies d' "appels" peuvent être virtuelles, par exemple dans un système structuré de transmissions multiplexées asynchrones dites "ATM".

Pour fixer les idées, chaque satellite peut offrir une capacité équivalente à environ mille circuits 64 kbits, en duplex intégral, avec un simple répéteur transparent effectuant une translation en fréquence directe. Chaque satellite, par exemple Sat₁, communique avec les terminaux portables d'usager, par exemple T₁ ou T₂, à l'aide d'un agencement d'antenne à balayage pour la réception et un autre agencement d'antenne à balayage pour la transmission. Dans un but de simplification, il n'a été représenté que l'agencement d'antenne de réception AS₁.

Selon un aspect de l'invention, chacune des antennes génère un nombre déterminé de pinceaux, par exemple 20, référencés p₁ à p₂₀, dont la section est fortement ellipsoïdale. On supposera ci-après, sans que cela soit en rien limitatif de la portée de l'invention, que l'axe principal de l'ellipse est orthogonal au vecteur vélocité 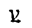 du satellite Sat₁. On suppose aussi que celui-ci est en mouvement du sud vers le nord au-dessus de la surface de la terre Tₑ.

A priori, les empreintes des faisceaux, transmis et reçus, sont semblables. On suppose que ces faisceaux ont des polarisations croisées (orthogonales) et occupent des bandes de fréquence de largeur sensiblement égales.

Selon un aspect important, la bande globale de fréquences (typiquement 500 MHz) est subdivisée entre les différents pinceaux (par exemple 20), p₁ à p₂₀, en sous-bandes, F₁ à F₂₀. On va enfin supposer que chaque pinceau opère dans une sous-bande spécifique, contiguë à la sous-bande du pinceau adjacent (25 MHz, dans l'exemple décrit).

En mettant en oeuvre cette disposition et en modifiant la fréquence selon une loi proportionnelle à la vélocité angulaire 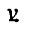 du satellite Sat₁, il est possible de réaliser une commutation automatique entre pinceaux bien que le satellite Sat₁ soit en mouvement continu, ce sans blocage.

Par exemple, sur la figure la, le terminal portable d'usager T₁ fonctionne dans la sous-bande des fréquences F₃ lorsque le satellite Sat₁ est en position 1. La liaison l₁ est établie lorsque le terminal T₁ se trouve dans l'empreinte du pinceau p₃, correspondant à cette sous-bande F₃. On modifie alors progressivement la fréquence de fonctionnement vers les fréquences de la sous-bande des fréquences F₂. Le satellite Sat₁ est supposé se déplacer du sud vers le nord. Les bandes de fréquences associées aux pinceaux p₁ à p₂₀, sont dans l'ordre F₁ à F₂₀, du sud au nord (dans l'exemple décrit). Il se peut d'ailleurs que la sous-bande F₂ soit atteinte pendant la durée de la transmission et que l'on se trouve dans le pinceau p₂, correspondant à cette sous-bande.

Il est à noter que ces dispositions ne présupposent aucun traitement de données à bord des satellites, par exemple du satellite Sat₁, mais une simple variation de la fréquence utilisée au niveau de la station terrestre ST₁ pendant la durée de la liaison l₁ entre celle-ci et le terminal T₁. Nalurellement, le terminal T₁ doit être apte à suivre ces variations de fréquence reçue et d'émettre sur cette fréquence instantanée. Ce type de commutation ne nécessite aucune procédure de haut niveau, complexe à mettre en oeuvre et, d'autre part, se montre strictement non bloquant.

On vient de décrire la procédure de commutation entre pinceaux, p₁ à p₂₀, du diagramme de rayonnement d'un même satellite, en l'occurrence du satellite Sat₁. Cependant, lorsque le terminal T₁ va se trouver dans le dernier pinceau, p₂₀, du satellite Sat₁, dont la sous-bande associée est F₁, si la communication en cours n'est pas terminée, il va falloir organiser la commutation entre ce pinceau et le premier pinceau du satellite suivant, soit le satellite Sat₂. Si les sous-bandes de fréquences sont réparties de façon identique à celles du satellite Sat₁, il sera nécessaire de sauter brutalement de la sous-bande F₁ à la sous-bande F₂₀.

Dans un mode de réalisation préféré de l'invention, la répartition des sous-bandes du satellite Sat₂ est organisée de telle manière qu'elles se présentent selon un ordre inverse, c'est-à-dire de la sous-bande de fréquences F₂₀ à la sous-bande de fréquences F₁, du sud vers le nord (dans l'exemple décrit).

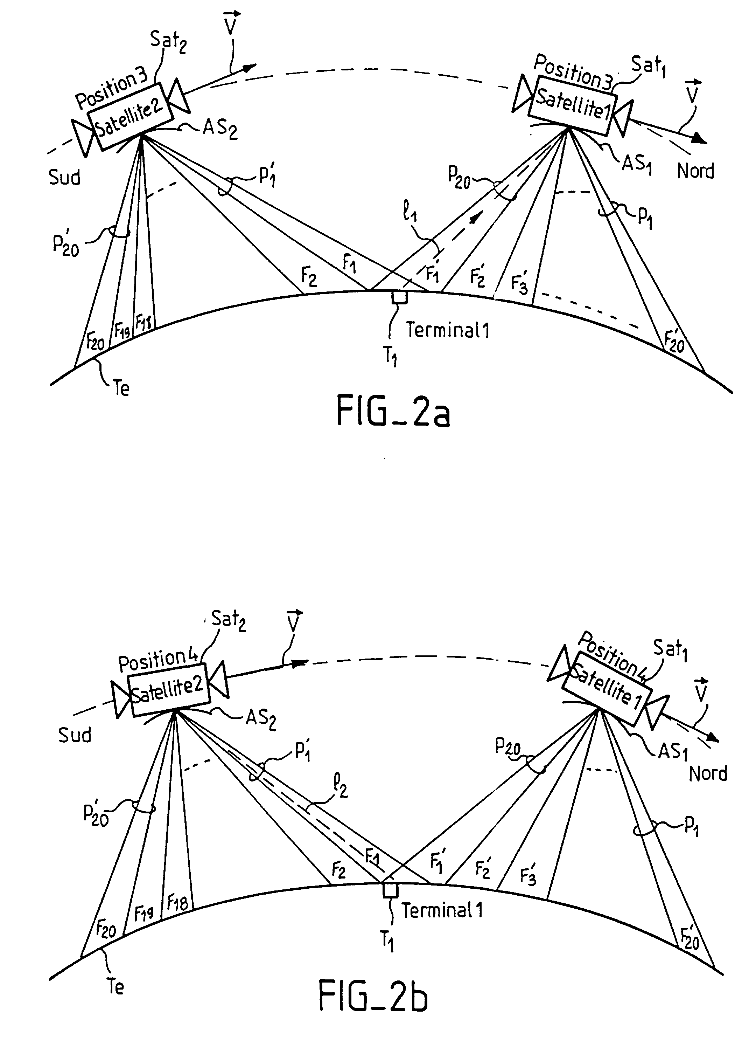

Les figures 2a et 2b illustrent schématiquement la commutation entre deux satellites consécutifs Sat₁ et Sat₂. Pour simplifier les dessins, on n'a pas représenté les stations terrestres. Les pinceaux correspondant aux sous-bandes respecives F₁ à F2₀ sont repérés p'₂₀ à p'₁.

Sur la figure 2a, les satellites, Sat₁ et Sat₂, sont représentés en position 3 dans leurs mouvements de rotation autour de la terre Tₑ, du sud vers le nord, avec la vitesse 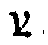 Le terminal T₁ est situé dans l'empreinte du dernier pinceau, p₁, du satellite Sat₁ et fonctionne dans la sous-bande de fréquences F₁ (liaison l₁). Le premier pinceau, p'₂₀, du satellite Sat₂ peut recouvrir en tout ou partie le dernier pinceau, p₁, du satellite Sat₁.

Les sous-bandes de fréquences associées à ces deux pinceaux, p₁ et p'₂₀ respectivement, étant identiques, la commutation entre les deux satellites, Sat₁ et Sat₂, peut s'effectuer simplement. Cette commutation peut être progressive, le terminal T₁ pouvant recevoir des signaux des deux satellites, Sat₁ et Sat₂, comme il le sera explicité ci-après.

Sur la figure 2b, les satellites, Sat₁ et Sat₂, sont représentés en position 4 dans leurs mouvements de rotation autour de la terre Tₑ. La liaison, référencée l₂, est désormais réalisée exclusivement entre le terminal T₁ et le satellite Sat₂. On modifie alors progressivement la fréquence de fonctionnement vers les fréquences de la sous-bande des fréquences F₂ (et ainsi de suite, vers F₃, etc.).

De façon à éviter les interférences entre pinceaux et à faciliter la commutation, le schéma d'accès dans chaque sous-bande peut s'effectuer, par exemple et sans que cela soit en rien limitatif de la portée de l'invention, selon le mode dit "AMDC" synchrone (Accès Multiple par Différence de Code), que ce soit en transmission ou en réception. Au niveau global des satellites, par exemple Sat₁, le schéma sera du type "V-MRF-AMDC", c'est-à-dire Multiplexage en Fréquence Variable ("MRF") entre pinceaux et "AMDC" à l'intérieur de chaque pinceau, c'est-à-dire dans une sous-bande de fréquence, par exemple F₁. Le mode AMDC autorise un traitement efficace de canaux virtuels en mode de transmission multiplexé asynchrone ("ATM"). De plus, une grande variété de débits binaires peut être traitée, à l'intérieur d'un même débit d'élément en "MRF", en mettant en oeuvre des gains de processus différents. Le mode "MRF" peut être remplacé par un mode équivalent, tel que le "MRT", ou multiplexage temporel, à étalement de spectre, pour la liaison aval (Station Terminale ST₁ → satellite Sat₁ → terminal T₁, voir figures 1a et 1b), si nécessaire, par exemple pour une acquisition de fréquence et son suivi plus aisés.

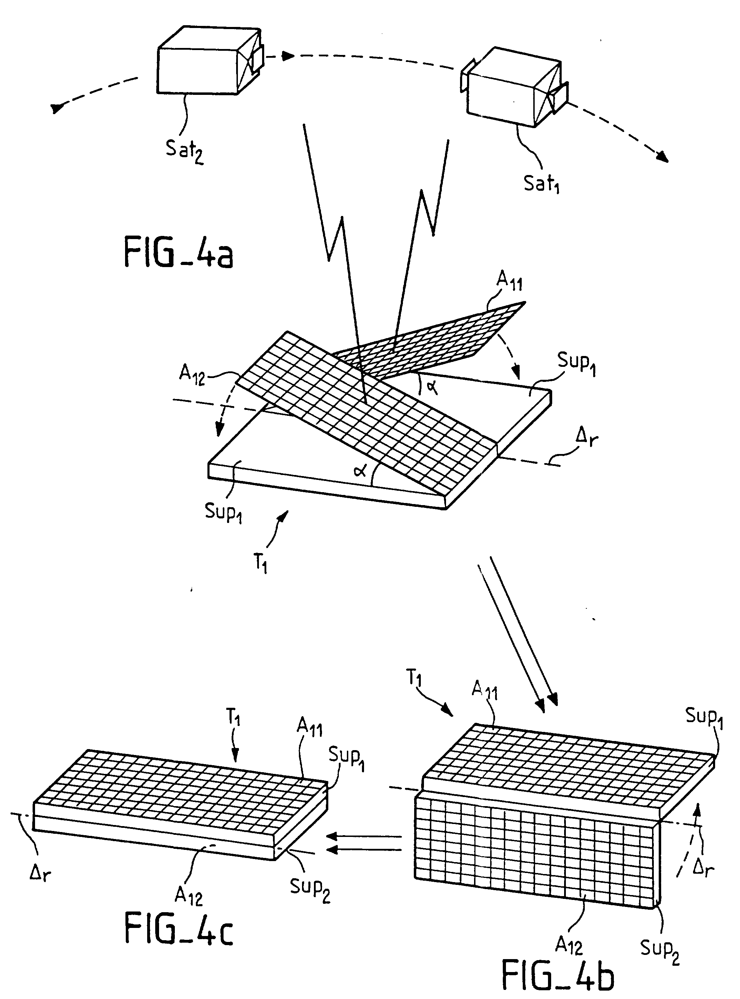

En outre, la zone de couverture de chaque pinceau peut être subdivisée en sous-pinceaux, par exemple trois, comme illustré par la figure 3. Chaque pinceau, par exemple p₁, est subdivisé en trois sous-pinceaux, p_{1A} à p_{1C}, alignés sur l'axe principal Δ₁ de l'ellipse que forme la section de chaque pinceau. L'axe Δ₁ est orthogonal, comme il a été indiqué, à un axe Δ (petit axe de l'ellipse), parallèle au vecteur vitesse 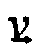 . Chaque série de sous-pinceaux, par exemple p_{1A} à p_{20A}, peut être générée par des antennes à balayage séparées, disposées en parallèle, toutes fonctionnant de manière identique.

Cette disposition s'avère particulièrement intéressante pour la liaison satellite-sol pour augmenter le gain d'antenne, diminuer la consommation de puissance de l'électronique embarquée et diminuer la densité spectrale de puissance interférant avec les systèmes géostationnaires.

Une autre amélioration consiste à rétrécir les pinceaux et sous-pinceaux à un seul usager actif, c'est-à-dire à individualiser le balayage de fréquence à l'usager. Si on se reporte de nouveau à la figure la, cela revient à utiliser une fréquence centrale de la sous-bande légèrement différente, soit F'₃, pour le spectre à étalement de fréquence du terminal T₂, par exemple, bien que la même procédure de balayage en fréquence soit appliquée à ce terminal T₂.

Ce perfectionnement ne complique ni même ne modifie l'antenne embarquée, mais offre un gain d'environ 3 dB dans le bilan de liaison et rend absolument lisse la poursuite en fréquence par les terminaux mobile d'usagers.

Il est naturellement nécessaire de mettre en oeuvre une syntonisation de fréquence plus fine par usager, mais la complexité éventuelle qui en résulte est rejetée au niveau des stations terminales terrestres.

On constate également une légère dégradation due au recouvrement imparfait des spectres "AMDC" qui ne sont plus complètement synchrones. Cependant des usagers très proches (par exemple T₁ et T₂, sur la figure 1a) sont quasi-synchrones et des usagers distants peuvent être discriminés par des gains d'antennes différents à des fréquences distinctes, ce qui conduit à une réjection de bruits propres comprise entre les niveaux "AMDC" synchrones et asynchrones.

Pendant le mouvement orbital du satellite les terminaux mobiles d'usagers doivent poursuivre le pinceau, que ce soit en réception ou en transmission. Les figures 4a à 4c illustre schématiquement un exemple de réalisation d'un terminal avec son antenne.

Le terminal comprend deux antennes planes, A₁₁ et A₁₂. Ces antennes, A₁₁ et A₁₂, sont des antennes à balayage. Elles sont disposées sur des supports, Sup₁ et Sup₂, respectivement. Ces supports peuvent être constitués par des boîtiers comportant les circuits électroniques habituels de réception des signaux, d'émission et de traitement de ceux-ci.

Sur la figure 4a, on a représenté le terminal T₁ en mode actif, c'est-à-dire avec ses antennes, A₁₁ et A₁₂, déployées.

La poursuite du satellite, compte-tenu des dispositions qui viennent d'être rappelées, peut s'effectue dans un simple plan, avec une très faible erreur, et non dans un volume. Ce plan est déterminé simplement, si l'on connaît les caractéristiques des orbites des satellites (qui sont répétitives), l'heure et la position du terminal d'usager mobile sur la surface du globe terrestre Tₑ. Des circuits de calcul bien connus peuvent être utilisés à cette fin.

Chaque antenne, A₁₁ et A₁₂, est alignée avec une direction orthogonale au plan de l'antenne. La surface des deux supports, Sup₁ et Sup₂, forme un plan unique et les antennes, A₁₁ et A₁₂, sont inclinées d'un même angle α par rapport à ce plan unique.

Selon un aspect avantageux de l'invention, chaque antenne, A₁₁ et A₁₂, est reliée à des circuits distincts d'émission et de réception.

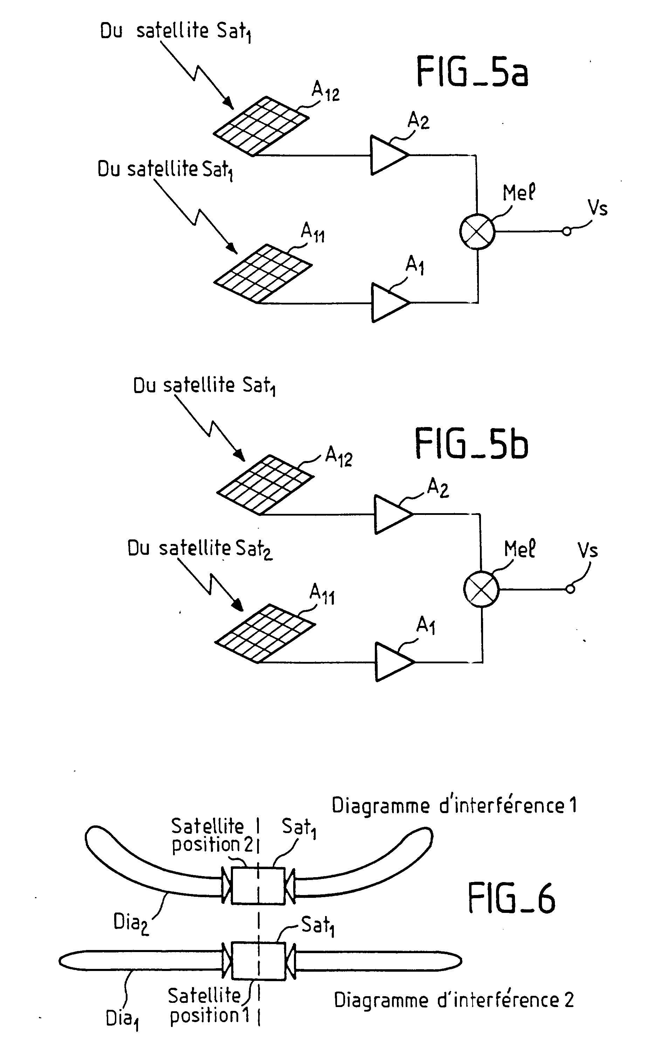

Si on considère tout d'abord le mode "réception", deux cas se présentent :
- Lorsque le satellite, par exemple Sat₁ (voir figures 1a ou 1b), se trouve sensiblement au zénith, les deux antennes, A₁₁ et A₁₂, reçoivent le même signal, en provenance du même satellite Sat₁. La figure 5a illustre schématiquement ce cas. Les signaux reçus sont transmis aux entrées de deux circuits d'entrée habituels, représentés par de simples amplificateurs, A₁ et A₂, respectivement. Chaque voie peut être utilisée séparément, mais les signaux peuvent être combinés avantageusement par un circuit mélangeur Mel, ce qui permet d'obtenir un signal de sortie V_{S} de meilleure qualité. Cette combinaison est effectuée au niveau de la démodulation. Le signal V_{S} est ensuite traité de façon connue.
- Lors de la commutation entre satellites contigus (voir figures 2a et 2b), chaque antenne, A₁₁ et A₁₂, reçoit le même signal, quant à son contenu, mais en provenance de satellites différents. Dans l'exemple illustré par la figure 5b, l'antenne A₁₁ reçoit le signal en provenance du satellite Sat₁ et l'antenne A₁₂ du satellite Sat₂. Les deux liens de transmission l₁ (voir figure 1b, par exemple) et l₂ (voir figure 2b, par exemple) restent sous la commande de la même station terrestre terminale, par exemple ST₁ (figures 1a et 1b). La puissance reçue est additionnée par le circuit Mel, comme précédemment. Cette technique est connue sous le nom de "techniques de diversité" et est applicable au mode "AMDC". De cette façon, la commutation entre satellite s'effectue sans discontinuité.

Pour la transmission, une procédure similaire peut être mise en oeuvre. Il est nécessaire alors de disposer de deux amplificateurs de puissance dans le terminal (amplificateur d'attaque des antennes).

Puisqu'il n'est nécessaire d'effectuer la poursuite du ou des satellite(s) que dans un seul plan et non en trois dimensions, il est possible d'optimiser la configuration de l'antenne, ou plus précisément des antennes des terminaux mobiles d'usagers. Il est en particulier possible de minimiser les pertes de balayage et d'obtenir un diagramme de rayonnement, tout en autorisant une commutation aisée, inter-pinceaux d'un même satellite (par exemple Sat₁) ou inter-satellites (par exemple figures 2b ou 4a : Sat₁ à Sat₂).

L'antenne peut être repliée, lorsque le terminal T₁ passe du mode actif au mode passif.

Les figures 4b et 4c illustrent deux étapes du repliement des antennes A₁₁ et A₁₂. Tout d'abord, les antennes sont rabattues sur le plan unique formé par les faces supérieures des supports, Sup₁ et Sup₂. Ceux-ci peuvent être à leur tour repliés autour d'un axe charnière Δᵣ (figure 4b), rabattus, tête-bêche, l'un sur l'autre, et verrouillés dans cette position (figure 4c). Pour obtenir ces résultats, des organes mécaniques bien connus peuvent être utilisés : charnières, etc.

En mode passif, les terminaux mobiles d'usagers, par exemple T₁, ne peuvent qu'être appelés (mode dit "paging" selon la terminologie anglo-saxonne). Il est possible de mettre en oeuvre la même procédure de multiplexage "AMDC", soit par une utilisation partielle des antennes planes repliées, A₁₁ et A₁₂, soit à l'aide d'une antenne auxiliaire (non représentée).

Le déploiement correct, comme il a été indiqué peut s'effectuer de façon simple, puisqu'on connaît les caractéristiques orbitales des satellites du réseau. Ces données peuvent être enregistrées dans des tables (mémoires de type programmable ou PROM par exemple). Il est également nécessaire de connaître, au moins approximativement, l'heure et la localisation du terminal T₁.

Une procédure initiale (par utilisation des informations précédentes : heures, localisation, et/ou signaux de données de radiodiffusion en provenance des satellites) permet un réglage fin de l'orientation, de la fréquence d'utilisation ainsi que la création d'une voie de signalisation à l'intérieur de la bande "AMDC" (associée à un bas débit d'information par usager).

Au niveau des satellites, il existe de nombreuses solutions pour la poursuite de la station terminale terrestre : réflecteur orientable mécaniquement, antenne réseau à commande phase, agencement à alimentation multiple à base d'une matrice de Butler ou antenne à balayage de fréquence d'un autre type. On peut mettre en oeuvre une procédure de poursuite et de commutation autonome, similaire à celle des terminaux.

Dans un mode de réalisation préfére, chaque station terminale terrestre (par exemple ST₁, figures 1a et 1b) comprend au moins une antenne double (par exemple des paraboles) par orbite de satellite en vue. Cette disposition autorise une commutation plus graduelle. Chaque station est responsable de l'attribution correcte des voies de communication dans les sous-bandes (c'est-à-dire les pinceaux et fréquences, incluant le balayage de fréquence pour compenser le mouvement orbital des satellites), et dans les sous-bandes, des codes appropriés "AMDC" pour les procédures d'initialisation et des voies de signalisation pour les terminaux mobiles d'usagers. Elles sont également responsables du raccordement aux réseaux publics ou privés, de l'administration de la localisation des terminaux en mode actif et des caractéristiques du trafic, conjointement avec d'autres stations terminales, ainsi que toutes autres fonctions nécessaires à des opérations correctes.

Il est bien connu, par ailleurs, que l'un des problèmes majeurs rencontrés avec les systèmes de satellites sur des orbites plus basses que les satellites ses systèmes géostationnaires, sont les interférences et la coordination avec les autres systèmes, autant géostationnaires que non-géostationnaires.

En ce qui concerne les systèmes similaires de satellites non-géostationnaires, il suffit d'utiliser des phases d'orbites de satellites différentes et/ou des traces sur le sol terrestres différentes.

En ce qui concerne les satellites géostationnaires, travaillant dans les mêmes bandes de fréquences, il est nécessaire de contrôler les interférences mutuelles comme expliqué ci-après.

L'un des buts que se fixe le système selon l'invention, comme il a été indiqué, est de résoudre ce problème.

Le cas le plus critique, par rapport aux systèmes géostationnaires est naturellement l'interférence des signaux descendants (satellite-terre), très puissants, atteignant les terminaux fonctionnant en coopération avec les satellites géostationnaires. La "Puissance Isotropique Rayonnée Equivalente" ou "PIRE" est très importante puisqu'il s'agit de communiquer avec des terminaux portables de très petites tailles, dont les antennes, même déployées ont une surface très faible. En outre, du fait de latitude plus basse que celle des satellites géostationnaires, les signaux subissent une atténuation plus faible.

On peut, cependant, observer que les satellites du système selon l'invention interfèrent pendant une partie très limitée de leur orbite (à proximité de l'équateur, typiquement entre -9° et +9° de latitude) et selon une figure d'interférence présentant sensiblement un "diagramme en banane", comme illustré par la figure 6. Cette dernière figure illustre deux diagrammes Dia₁ et Dia₂, pour deux positions distinctes d'un satellite, par exemple le satellite Sat₁. L'épaisseur de ce "diagramme en banane" dépend de divers paramètres : notamment les performances de réception en de hors de l'axe de réception de plus grande sensibilité des terminaux (appartenant au système géostationnaire) et le niveau des signaux (densité spectrale de puissance) du système selon l'invention comparé au signal nominal provenant des satellites géostationnaires.

Si on considère que ces interférences à "diagramme en banane" ont une forme très proche des empreintes des pinceaux et qu'elles se déplacent d'autant plus rapidement qu'elles ont une surface plus importante (c'est-à-dire lorsque l'on s'approche des latitudes ± 9° précitées), une contre-mesure très simple, et cependant efficace, pour éviter les interférences indésirables peut être adoptée. La plus simple est de supprimer le ou les pinceau(x) correspondant à l'interférence à "diagramme en banane". Les positions de ces pinceaux peuvent être connues a priori puisqu'elles dépendent de la position instantanée des satellites, positions qui sont naturellement connues en permanence. L'opération de suppression des pinceaux en cause est simple, du fait des caractéristiques de balayage en fréquence de l'antenne du satellite. Il suffit d'interrompre, au niveau de la station terminal terrestre (par exemple ST₁) commandant le ou les satellite(s) les sous-bandes de fréquences correspondant aux pinceaux à supprimer.

Des travaux internationaux de standardisation sont exposés dans publications suivantes :
- "ITU-R Recommandation 580-2" ;
- "ITU-R Special Committee Results on Coordination between Geostationary and Non-Geostationary Satellite System".

Compte-tenu des travaux de standardisation rappelés ci-dessus, d'une part, et des caractéristiques de résistance aux interférences du mode "AMDC", d'autre part, la durée de telles interruptions serait d'environ 2 à 3 minutes toutes les 2 heures (il est d'ailleurs probable que la voie de signalisation reste quand même active), ce dans le pire des cas, c'est-à-dire pour un anneau continu de satellites le long d'un arc géostationnaire, tous fonctionnant dans la même bande de fréquence que les satellites du système selon l'invention. La non-disponibilité résultante (environ 2% des intervalles de temps prévisibles) est alors comparable à la non-disponibilité due à l'atténuation en cas de pluie (environ 1% des intervalles de temps prévisibles) est bien meilleure que la non disponibilité due aux occultations tolérées pour les systèmes terrestres mobiles.

Ces hypothèses ont été retenues pour un système de 6 à 8 satellites. Les interférences pourraient être entièrement évitées si on recourt à un nombre plus important de satellites : 10 à 15 par exemple.

Une autre voie pour résoudre le problème des interférences est basée sur le fait que, dans chaque zone, seul un sous-ensemble de sous-bandes de fréquences peut interférer avec les systèmes de satellites géostationnaires (en l'occurrence seulement les sous-bandes correspondant à un angle de balayage sous lequel les "diagrammes en de bananes" sont générées, c'est-à-dire lorsque le satellite se trouve entre les latitudes -9° et +9°). La coordination de fréquences pourrait être limitée à ce seul ensemble de sous-bandes, qui peut être choisi dans la portion la moins critique du spectre (par exemple en marge de la bande attribuée aux transpondeurs géostationnaires ou en tenant compte de la position réelle courante des coordonnées des satellites et des fréquences au lieu de l'hypothèse pessimiste précitée, c'est-à-dire celle d'un anneau continu de satellites).

D'autres méthodes et/ou combinaisons de méthodes peuvent être également mise en oeuvre.

On va maintenant expliciter de façon plus détaillée les différents paramètres associés aux satellites du réseau composant la partie spatiale du système.

Comme il a été indiqué, les orbites sont circulaires et inclinées avec une période nodale de 8 heures sidérales (28721") (synchronisation triple sur la rotation de la terre). Le même tracé sur la surface terrestre est répété toutes les 24 heures. Cependant, pour compenser la dérive longitudinale du noeud ascendant, il est nécessaire d'adopter une période orbitale légèrement plus courte.

On obtient une couverture optimisée des terres émergées si l'on adopte des paramètres d'orbite appropriés, par exemple :
- angle d'inclinaison : 75°;
- noeud ascendant : 30°;
- Anomalie moyenne : 0°;
- Période orbitale : environ 28714" (au lieu de 28721" théoriques);
- altitude : 13901 km.

Dans ce cas l'angle de site minimum est compris entre 20° et 30° (pour un réseau de satellites de 6 à 8 unités).

Naturellement les satellites du réseau, par exemple 6 minimum, sont régulièrement espacés. Cependant, puisque les satellites, pris dans leur ensemble, ont un mouvement apparent comparable à la reptation d'un serpent, pour un observateur terrestre, il arrive que la "tête" et de la "queue" ne se recouvre pas correctement pendant une demi-heure par jour, aux latitudes tempérées. Aussi, pour éviter cet inconvénient, il est nécessaire de prévoir au moins un satellite supplémentaire, soit 7 satellites pour le réseau.

Pour fixer les idées, en se plaçant dans l'hypothèse de 7 satellites, les paramètres d'orbites sont les suivants :

| Satellite N° : | Noeuds ascendants | Anomalies droites : |
|---|---|---|
| 1 | 120° | 90° |
| 2 | 90° | 180° |
| 3 | 60° | -90° |
| 4 | 30° | 0° |
| 5 | 0° | 90° |
| 6 | -30° | 180° |
| 7 | -60° | -90° |

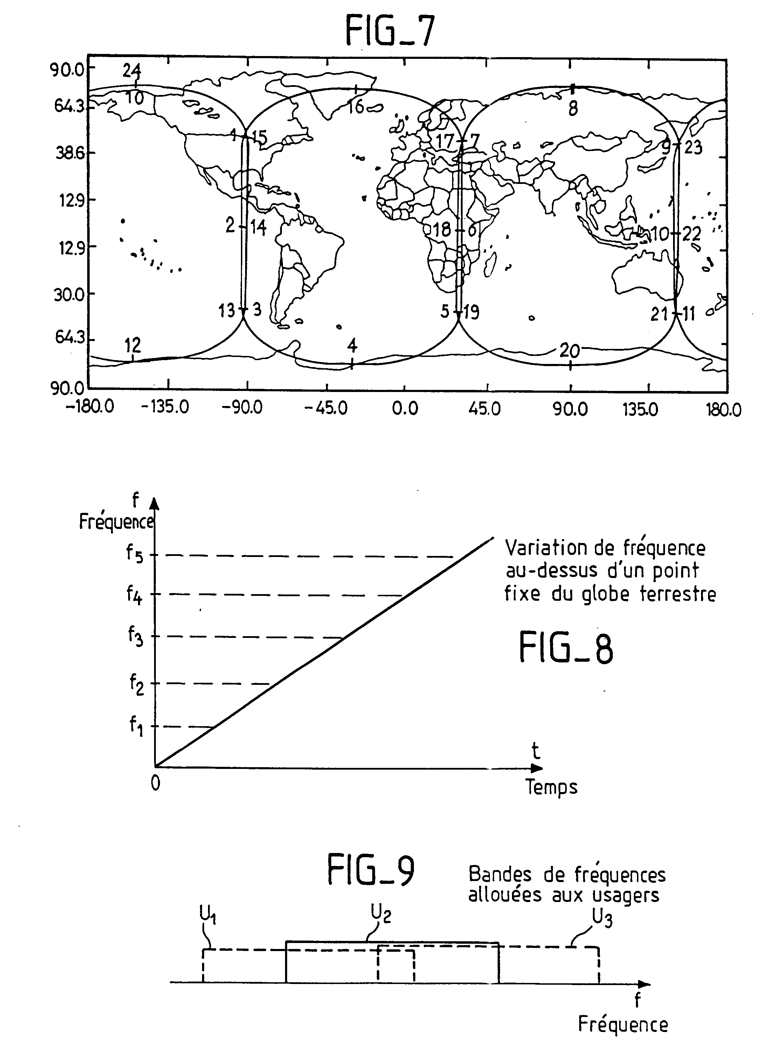

La figure 7 illustre les positions horaires des satellites sur une projection terrestre (trace).

On va maintenant détailler les caractéristiques du système de communication, dans un exemple de réalisation préféré.

Quatre liens sont nécessaires pour garantir des communications en duplex intégral : "station terminale terrestre ↔ satellite" et "satellite ↔ terminal mobile d'usager", c'est-à-dire des transmissions "terre ↔ espace". Ces communications en duplex intégral peuvent être obtenues en utilisant différentes bandes de fréquences différentes polarisations. Comme indiqué, on peut choisir, par exemple, la bande Ku pour les liens "satellite ↔ terminal mobile d'usager" et la bande Ka pour les liens "station terminale terrestre ↔ satellite". D'autres fréquences peuvent être utilisées : bande millimétrique, par exemple.

La technique d'accès sera préférentiellement du type "SD-AMDC" ("Séquence Directe- Accès Multiple par Différence de Code"), bien que le système puisse fonctionner selon bien d'autres techniques. L'utilisation d'un pinceau simple par usager est particulièrement intéressant, du moins si le système n'est pas trop chargé.

Lorsqu'une antenne à balayage de fréquence est utilisée dans le terminal portable d'usager, par exemple T₁ (voir figures 1a et 1b), ce terminal reçoit d'une antenne à haut gain, embarquée sur le satellite (par exemple Sat₁), un signal dont la fréquence varie selon le diagramme de la figure 8, selon sa position relative par rapport à l'antenne embarquée sur le satellite (voir figures 1a et 1b, par exemple). Ce diagramme représente la variation de la fréquence du signal reçu en fonction du temps. L'axe des temps est arbitraire, en ce sens que le démarrage (instant 0) représente l'instant pour lequel la station terrestre rentre dans la zone de visibilité d'un satellite donné (par exemple Sat₁). Les autres fréquences sont atténuées en fonction du diagramme de rayonnement de l'antenne propre au terminal considéré (par exemple T₁). De cette façon, il est possible de diviser la zone de couverture du satellite (par exemple Sat₁) en pinceaux virtuels, chacun étant caractérisé par une bande de fréquences nominale, de faible largeur par rapport à la largeur de bande du système, bande pour laquelle l'antenne présente un gain important.

Le pinceau virtuel est fixe sur la surface de la terre, mais la fréquence centrale évolue comme illustré par les figures 1a, 1b et 8. De cette façon, si la station terrestre (par exemple ST₁) est capable de suivre les variations de fréquence, elle est toujours dans le centre du pinceau, donc elle autorise un gain plus important de l'antenne du satellite (par exemple Sat₁) : il n'y a pas de pertes dues aux baisses de gains en bordure de couverture.

Puisque la vitesse apparente au sol des satellites est importante (environ 5000 km/h), une station terrestre peut "voir" passer plusieurs pinceaux pendant un appel en cours. Les systèmes de l'art connu nécessitent une commutation inter-faisceaux alors que la station terrestre dans le système selon l'invention continue de "voir" le même pinceau virtuel, dont la fréquence change de la manière indiquée ci-dessus. La variation en fréquence est connue. C'est une fonction déterministe, que ce soit au niveau de l'émetteur qu'au niveau du récepteur. Elle peut être déduite, notamment, des coordonnées de la station et de l'heure. Il est donc suffisant que le transmetteur fasse varier sa fréquence en accord avec la loi précitée et que le récepteur fasse évoluer la fréquence de l'oscillateur local de changement de fréquence, de la même manière, pour pouvoir récupérer l'information de bande de base.

Le mécanisme à adopter nécessite de pouvoir suivre des variations de fréquence relativement larges, typiquement de l'ordre de 50 à 100 kHz/s, pour obtenir à tout moment le signal correct de bande de base. Cette exigence, en faisant appel aux technologies actuelles, peut cependant être satisfaite, même pour des terminaux bons marchés. Il doit être noté que cette variation importante de fréquence concerne seulement la fréquence centrale, ce qui est plus facile à traiter qu'un dispositif Doppler classique qui nécessite aussi des changements de débit de données, avec toutes les conséquences que cela implique sur la synchronisation, le filtrage, etc.

Les techniques de modulation et de filtrage adoptées dans le cadre de l'invention peuvent être les mêmes que celles mise en oeuvre dans les systèmes "AMDC" terrestres ou par satellites de l'art connu.

Un autre problème critique est posé par les satellites non-géostationnaires est le réacheminement des appels, c'est-à-dire la commutation entre stations terminales terrestres. Dans les systèmes de satellites de l'art connu, du type "LEO", la vitesse apparente des satellites sur la trace terrestre est très importante et l'angle de site est très faible (10° environ), de sorte que la zone de couverture du satellite est la même pour la station terminale terrestre et pour la station terrestre mobile. La commutation entre station terminale terrestre peut intervenir de façon aisée, en particulier lorsqu'une station terrestre mobile initie un appel en bordure de couverture. Le satellite lie la station terrestre mobile à la station terminale terrestre et celle-ci se connecte avec un réseau de communication terrestre fixe. Pendant l'appel, le satellite continue son mouvement en orbite, quitte la zone de visibilité de la station terminale terrestre pour rentrer dans la zone de visibilité de la suivante. Dans ce cas, il est nécessaire de réacheminer les canaux de communication entre stations terminales, par l'exploitation d'un réseau dédié, via un câble ou une liaison satellite, de manière à atteindre le réseau terrestre de communication fixe originel.

Tout au contraire, le système selon l'invention permet d'éviter, dans la majorité des cas, les commutations entre station terminales terrestres. Conformément à ce système, l'angle de site minimum pour les stations mobiles d'usagers (par exemple 25°) est plus important que l'angle de site minimum pour les stations terminales terrestres (par exemple 10°), de sorte que la zone de visibilité pour les stations terminales à partir du satellite est comparativement plus important. En exploitant cette propriété, les caractéristiques particulières des orbites des satellites et une localisation appropriée des stations terminales terrestres, il n'est normalement pas nécessaire d'effectuer des commutations entre ces stations puisqu'il est très vraisemblable que la communication cesse ou, pour le moins qu'une commutation inter-satellites intervienne, avant que ce dernier quitte la zone de visibilité de la station terminale terrestre.

Aussi le problème se réduit essentiellement à un partage de ressources entre stations terminales terrestres et une configuration simple de satellites sans commutation inter-stations terminales terrestres peut être envisagée.

On va maintenant détailler le bilan de liaison sur un exemple de réalisation préféré.

Les hypothèses suivantes ont été retenues :
- L'accès s'effectue selon le mode "SD-AMDC" déjà décrit, ce qui signifie que les usagers sont répartis selon des codes différents pour obtenir une expansion de bande passante.
- Le débit d'éléments est égal à 24, 576 MHz ;
- Le gain de traitement est de 64 pour un débit à la source de 384 kbits/s et 384 pour un débit à la source de 64 kbits/s ;
- Le récepteur du terminal mobile d'usager poursuit, par un balayage en fréquences, le lobe principal de l'antenne.

Comme conséquence de cette dernière caractéristique, les différents signaux d'usagers peuvent se recouvrir partiellement dans la même bande de fréquences. Cette disposition est illustrée par la figure 9. On a représenté trois bandes de fréquences, allouées à des usagers U₁ à U₃ et se chevauchant partiellement.

En conséquence, il n'y a pas, dans le système selon l'invention, de partition rigide de la zone de couverture en pinceaux, puisqu'il n'est pas possible d'identifier une fréquence centrale. Pour rendre les calculs plus aisés, un pinceau virtuel est défini comme étant la surface de la terre qui "voit" la bande passante de signal transmis avec un centre à la fréquence nominale. Le terminal mobile d'usager se trouve toujours au centre de la zone de couverture du pinceau virtuel (et le gain d'antenne du satellite est toujours maximum) mais il n'est pas possible de toujours obtenir des séquences étalées complètement orthogonales, même si les usagers restent synchronisés en temps. Cependant, la situation est plus favorable que dans les systèmes classiques du type "AMDC" asynchrones puisque le bruit propre d'usagers proches (reçu par la même puissance embarquée) est rejeté par leurs quasi-orthogonalités, alors que le bruit propre des usagers distants (donc largement non orthogonaux) est réduit par la discrimination d'antenne.

Un calcul précis des bruits d'auto-interférences est très difficile à effectuer. Il a été admis un scénario extrême défavorable basé sur un "AMDC" entièrement asynchrone, qui inclue une marge de manoeuvre.

Pour fixer les idées, les tableaux I à VI placées en fin de la présente description illustre des exemples de bilan de liaisons pour, respectivement :
- la liaison "aller" station terminale terrestre → satellite ;
- la liaison "aller" station satellite → terminal mobile d'utilisateur ;
- le bilan global de ces deux liaisons ;
- la liaison "retour" terminal mobile d'utilisateur → satellite ;
- la liaison "retour" satellite → station terminale terrestre ;
- le bilan global de ces deux liaisons.

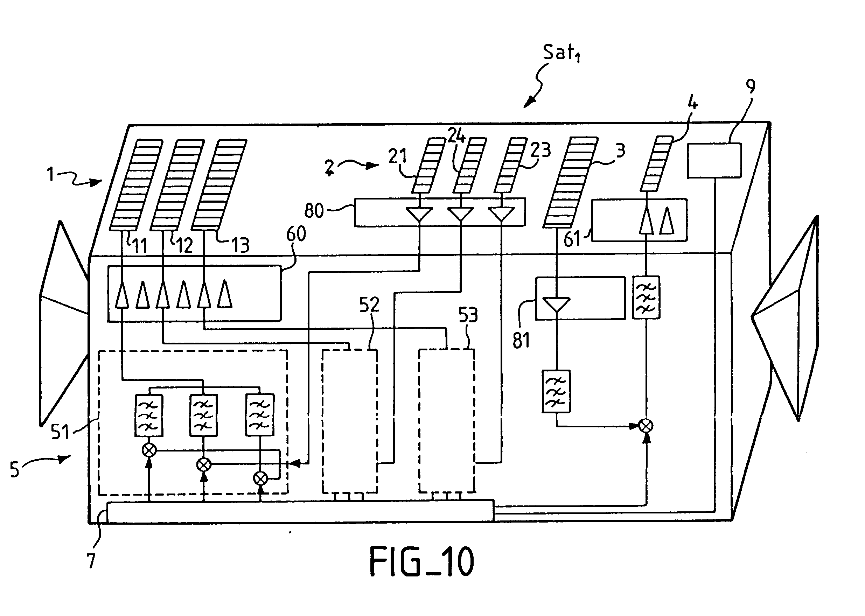

La figure 10 illustre schématiquement un exemple de réalisation possible d'un satellite de communication conforme à l'invention, sous forme de blocs diagrammes.

Le satellite, par exemple Sat₁, comprend des antennes à balayage en fréquences : 1, 2, 3 et 4. Les angles de balayage maximum sont de l'ordre de 35°, que ce soit de ou vers les terminaux mobiles d'usagers, ou de ou vers les stations terminales terrestres. Le lien aller comporte deux jeux d'antennes : l'antenne d'émission 1, en bande Ku, et l'antenne de réception, en bande Ka. Chaque jeu comporte trois antennes parallèles, 11 à 13 et 21 à 23, respectivement ; chacune couvrant typiquement 35° parallèlement à la direction de déplacement du satellite Sat₁ et 12,5° , selon une direction orthogonale. A titre d'exemple, les antennes 11 à 13 produisent les sous-pinceaux p_{1A} à p_{1C} représentés sur la figure 3.

Les antennes des liens "retours", 3 et 4, respectivement, sont uniques.

L'électronique du satellite Sat₁, comprend un oscillateur local 7 distribuant des signaux de fréquences sur ses sorties aux circuits habituels de commande et de traitement de signaux, notamment à un ensemble 5 de processeurs de fréquence intermédiaires, 51 à 53, commandant un ensemble de tubes à ondes progressives 60. Ces derniers alimentent les antennes 11 à 13. Un quatrième tube à ondes progressives, 61, alimente l'antenne d'émission 4 vers les stations terminales terrestres. L'électronique embarquée comprend également des amplificateurs à faible bruit, 80 et 81, disposés en sortie des antennes de réception. Elle comprend aussi une radiobalise 9, dont les signaux de sortie servent de référence pour l'oscillateur local 7. Elle comprend enfin différents filtres et mélangeurs, habituels à ce type d'application, qui n'ont pas été expressément référencés ainsi que tous les organes nécessaires au bon fonctionnement de l'ensemble : alimentations électriques, etc.

Chaque antenne en bande Ku réalise un balayage des canaux individuels de communication "AMDC" (environ 25 MHz) selon une direction parallèle au déplacement du satellite Sat₁, sur sa bande globale de 500 MHz. La même bande passante peut être réutilisée par l'ensemble des trois sous-antennes 11 à 13, si le protocole "AMDC" et la discrimination latérale d'antenne peut garantir une protection suffisante contre les interférences mutuelles.

Chaque bande de 500 MHz (dans les antennes 11 à 13) est obtenue à partir des signaux reçus par les antennes correspondantes (21 à 23) en bande Ka (par changement de fréquence, de 2,5 MHz à 500 MHz). Les signaux sont transmis aux processeurs de fréquences intermédiaires 51 à 53.

Une méthode analogue est implantée pour le lien "retour". Cependant les antennes de réception 3 et d'émission 4 sont uniques.

Il doit être clair que l'invention n'est pas limitée aux seuls exemples de réalisations précisément décrits, notamment en relation avec les figures 1 à 10. En particulier, le balayage des antennes, que ce soit des antennes embarquées ou des antennes de terminaux mobiles d'usagers, n'est pas limité au seul balayage de fréquences.

Les valeurs numériques (bandes de fréquence, bandes passantes, etc.) n'ont été fournies que pour mieux illustrer l'invention et dépendent essentiellement de l'application précisément envisagée. Enfin, les protocoles de transmission utilisables dans le cadre de l'invention ("AMDC", etc.) sont multiples.

**TABLEAU I**

| Bilan de la liaison "aller" "Station terminale terrestre → Satellite" | | |
|---|---|---|
| Fréquence | GHz | 30 |
| Angle de site minimum | Degrés | 10 |
| Distance | Km | 18173 |
| Puissance de transmission | dBW | 22,7 |
| Gain de pic de la station | dBi | 66 |
| PIRE | dBW | 88,7 |
| PIRE par usager | dBW | 58,7 |
| Pertes de propagation | dB | 207,1 |
| Pertes atmosphériques | dB | 10,5 |
| Gain d'antenne du satellite (antenne 3 secteurs), après matrice de Butler ("BFN") | dBi | 24,1 |
| Température de bruit du satellite ("BFN" inclue) | K | 900 |
| Constante de Boltzmann | dBW/K/Hz | -228,6 |
| Densité spectrale de bruit | dBW/Hz | -199,1 |
| Débit de bits | kHz | 64 |
| Débit de bits | dBHz | 48,1 |
| Eb/No lien "montant" | dB | 16,1 |
| Angle minimum en dehors de l'axe du satellite par rapport à l'antenne de la visée de la station terminale terrestre pour une interférence acceptable | degrés | ≅ 1 |
| Intervalle de temps durant lequel le satellite est aligné avec l'arc de satellites géostationnaires | minutes | ≅ 1 |

**TABLEAU II**

| Bilan de la liaison "aller" "Satellite → Station mobile d'usager" | | |
|---|---|---|
| Fréquence | GHz | 12 |
| Angle de site minimum | Degrés | 25 |
| Distance | Km | 16741 |
| Puissance de transmission à l'antenne | dBW | 19,8 |
| Gain global d'antenne du satellite (antenne 3 secteurs) après matrice de Butler ("BFN") | dBi | 32,1 |
| PIRE total | dBW | 51,9 |
| PIRE par usager | dBW | 21,9 |
| Pertes de propagation | dB | 198,5 |
| Pertes atmosphériques moyenne | dB | 1,5 |
| Gain d'antenne du terminal mobile d'usager | dBi | 30 |
| Température de bruit du terminal mobile | K | 290 |
| Constante de Boltzmann | dBW/K/Hz | -228,6 |
| Densité spectrale de bruit | dBW/Hz | -204 |
| Débit de bits | kHz | 64 |
| Débit de bits | dBHz | 48,1 |
| Eb/No lien "descendant" | dB | 16,1 |
| Angle minimum en dehors de l'axe du satellite par rapport à une antenne de la visée géostationnaire pour une interférence acceptable | degrés | ≅ 2 |
| Intervalle de temps durant lequel le satellite est aligné avec l'arc de satellites géostationnaires en dessous de l'angle "hors-axe" | minutes | 3< |
| Nombre d'usagers par satellite | nombre | 1000 |
| Marge du système | dB | 1 |

**TABLEAU III**

| Bilan global de la liaison "aller" "Station terminale terrestre → Terminal mobile d'usager" | | |
|---|---|---|
| Eb/No (global, de bout en bout) | dB | 6,2 |
| Eb/(No+Io) (global) | dB | 4,5 |
| Bande passante du système | MHz | 520 |
| Gain de traitement - à 64 kbits/s | | 384 |
| - à 384 kbits/s | | 64 |
| Débit d'éléments | Mbits/s | 24,576 |
| Taux d'erreur sur les bits (de bout en bout) | | 10⁻¹⁰ |

**TABLEAU IV**

| Bilan de la liaison "Terminal mobile d'usager → Satellite" | | |
|---|---|---|
| Fréquence | GHz | 14 |
| Angle de site minimum | Degrés | 25 |
| Distance | Km | 16741 |
| Puissance de transmission total à l'antenne | dBW | 3 |
| Gain d'antenne du terminal mobile d'usager | dBi | 31 |
| PIRE du terminal mobile d'usager | dBW | 34 |
| Pertes de propagation | dB | 199,8 |
| Maximum d'usagers co-localisés (pour des interférences à l'intérieur du système et avec des satellites géostationnaires) | nombre | 24 |
| Pertes atmosphériques | dB | 3 |
| Gain d'antenne du satellite | dBi | 28,6 |
| Température de bruit du satellite | K | 600 |
| Constante de Boltzmann | dBW/K/Hz | -228,6 |
| Densité spectrale de bruit | dBW/Hz | -200,8 |
| Débit de bits | kHz | 64 |
| Débit de bits | dBHz | 48,1 |
| Eb/No lien "montant" | dB | 11,5 |
| Angle minimum en dehors de l'axe d'un satellite géostationnaire par rapport à une antenne de visée du terminal mobile d'usager pour une interférence acceptable | degrés | ≅ 0,7 |
| Intervalle de temps durant lequel le satellite est aligné avec l'arc de satellites géostationnaires en dessous de l'angle "hors-axe" | minutes | 1< |
| Eb/Io | dB | 9,2 |
| Marge du système | dB | 1 |

**TABLEAU V**

| Bilan de la liaison " Satellite → Station terminale terrestre" | | |
|---|---|---|
| Fréquence | GHz | 20 |
| Angle de site minimum | Degrés | 10 |
| Distance | Km | 18173 |
| Puissance de transmission à l'antenne | dBW | 10,5 |
| Gain d'antenne du satellite (après "BFN") | dBi | 20,1 |
| PIRE du satellite | dBW | 30,6 |
| PIRE par usager | dBW | 0,6 |
| Pertes de propagation | dB | 203,7 |
| Pertes atmosphériques | dB | 6 |
| Gain d'antenne de la station terminale terrestre | dBi | 61 |
| Température de bruit de la station terminale terrestre | K | 290 |
| Constante de Boltzmann | dBW/K/Hz | -228,6 |
| Densité spectrale de bruit | dBW/Hz | -204 |
| Débit de bits | kHz | 64 |
| Débit de bits | dBHz | 48,1 |
| Eb/No lien "descendant" | dB | 7,8 |
| Angle minimum "en-dehors" de l'axe du satellite par rapport à l'antenne de la station terrestre fixe pour la visée d'un satellite géostationnaire pour une interférence acceptable | degrés | 1< |
| Intervalle de temps durant lequel le satellite est aligné avec l'arc de satellites géostationnaires en dessous de l'angle minimum "en-dehors" de l'axe | minutes | 1< |
| Nombre d'usagers par satellite | nombre | 1000 |

**TABLEAU VI**

| Bilan global de la liaison "retour" "Terminal mobile d'usager → Station terminale terrestre" | | |
|---|---|---|
| EbNo (global, de bout en bout) | dB | 6,2 |
| Eb/(No+Io) (global) | dB | 4,5 |
| Bande passante du système | MHz | 520 |
| Gain de traitement - à 64 kbits/s | | 384 |
| - à 384 kbits/s | | 64 |
| Débit d'éléments | Mbits/s | 24,576 |
| Taux d'erreur sur les bits (de bout en bout) | | 10⁻¹⁰ |

## Revendications

1. Procédé de transmission de signaux radioélectriques via un réseau de satellites (Sat₁, Sat₂) entre au moins une station terrestre fixe (ST₁) et des terminaux d'usagers (T₁), les satellites (Sat₁, Sat₂) étant animés d'un mouvement de rotation autour du globe terrestre (Tₑ) sur des orbites circulaires et à vitesse déterminée, les orbites étant inclinées par rapport à l'équateur et de rayon inférieur à celui des orbites géostationnaires, les satellites (Sat₁, Sat₂) étant à triple synchronisation avec la rotation du globe terrestre (Tₑ), chaque satellite (Sat₁, Sat₂) comprenant un arrangement d'antennes (1-4) permettant de générer au moins un faisceau à diagramme de rayonnement dirigé vers la surface du globe terrestre (Tₑ) et associé à une bande de fréquences de largeur déterminée, caractérisé en ce qu'il comprend au moins les étapes suivantes :
- partition dudit faisceau en un nombre déterminé de pinceaux contigus (p₁-p₂₀), chacun étant associé à une sous-bande de fréquences (F₁-F₂₀), subdivision de ladite bande passante de largeur déterminée ;
- établissement d'un lien de communication (l₁), selon au moins une direction, entre une desdites stations terminales terrestres (ST₁) et un desdits terminaux d'usager (T₁), via un desdits satellites du réseau (Sat₁), par utilisation d'une fréquence instantanée de transmission comprise dans une première sous-bande de fréquences (F₃) associée à un premier pinceau (p₃), ce dernier illuminant ledit terminal d'usager (T₁) à l'instant de survol de celui-ci par ce satellite (Sat₁);
- et décalage progressif de ladite fréquence de transmission instantanée, pendant la durée du lien de communication (l₁), vers la sous-bande de fréquences suivante (F₂) associée au pinceau adjacent (p₁) et à un rythme proportionnel à ladite vitesse de rotation déterminée, de manière à compenser ledit mouvement et à permettre la poursuite dudit satellite (Sat₁).

2. Procédé selon la revendication 1, caractérisé en ce que ladite bande de fréquences est subdivisée en sous-bandes de fréquences (F₁-F₂₀) d'égales largeurs, en ce que chacun desdits pinceaux (p₁-p₂₀) est associé à une sous-bande de fréquences spécifique (F₁-F₂₀), et en ce que l'arrangement de ces sous-bandes de fréquences (F₁-F₂₀) forme un spectre continu, de manière à ce que des pinceaux contigus soient associés à des sous-bandes de fréquences également contiguës, évoluant dans un sens déterminé.

3. Procédé selon la revendication 2, caractérisé en ce que, lors de ladite étape de décalage de fréquences, l'amplitude du décalage est telle que ladite fréquence instantanée de transmission saute d'une fréquence initiale comprise dans ladite première sous-bande de fréquences (F₃) à une fréquence finale comprise dans la sous-bande de fréquences suivante (F₂), associée audit pinceau adjacent (p₂), de manière à assurer la commutation inter-pinceaux (p₃, p₂) sans blocage.

4. Procédé selon la revendication 2, caractérisé en ce que, pour deux satellites consécutifs (Sat₁, Sat₂) dudit réseau, lesdites sous-bandes de fréquences (F₁-F₂) associées auxdits pinceaux (p₁-p₂₀, p'₁-p'₂₀) sont arrangées en sens inverse, de manière à ce que lorsque le dernier pinceau (p₂₀) d'un premier satellite (Sat₁), associé à une sous-bande de fréquences déterminée (F₁) cesse d'illuminer un desdits terminaux d'usagers (T₁), celui-ci soit illuminé par le premier pinceau (p'1) du satellite suivant (Sat₂), ce pinceau (p'1) étant associé à la même sous-bande de fréquences (F₁), et de manière à réaliser une commutation inter-satellites (Sat₁, Sat₂) sans blocage.

5. Procédé selon la revendication 4, caractérisé en ce que les empreintes desdits dernier (p₂₀) et premier (p'₁) pinceaux de deux satellites consécutifs (Sat₁, Sat₂) se chevauchent en tout ou partie au niveau de la surface du globe terrestre (Tₑ), de manière à ce que ladite commutation inter-satellites (Sat₁, Sat₂) soit progressive.

6. Procédé selon l'une quelconque des revendications 1 à 5, caractérisé en ce que lesdits pinceaux (p₁-p₂₀) ont une section elliptique, à ellipsivité élevée et dont l'axe principal (Δ₁) est orthogonal à la direction de déplacement du satellite (Sat₁) dudit réseau illuminant l'un desdits terminaux d'usagers (T₁) pendant ladite communication.

7. Procédé selon la revendication 6, caractérisé en ce que chaque pinceau (p₁) est subdivisé en un nombre déterminé de sous-pinceaux (p_{1A}, p_{1B}, p_{1C}).

8. Procédé selon les revendications 6 ou 7, caractérisé en ce que chacun desdits pinceaux (p1) ou sous-pinceaux (p_{1A}, p_{1B}, p_{1C}) est alloué à un seul terminal d'usager (T₁).

9. Procédé selon la revendication 7, caractérisé en ce que des bandes de fréquences dont les fréquences centrales sont distinctes, mais présentant un recouvrement, sont allouées à des terminaux d'usagers (U₁-U₃) également distincts de manière à définir des pinceaux virtuels, et à ce que lesdits terminaux d'usagers (U₁-U₃) soient toujours situés au centre de ce pinceaux virtuels, lesdites fréquences de transmission instantanées de chacun de ces terminaux d'usagers (U₁-U₃) étant confondues avec lesdites fréquences centrales.

10. Procédé selon l'une quelconque des revendications 1 à 9, caractérisé en ce que ledit lien de communication (l₁) consiste en un duplex intégral et en ce que les transmissions "aller" et "retour" ont des polarisations croisées, orthogonales entre elles.

11. Procédé selon l'une quelconque des revendications 1 à 10, caractérisé en ce que pour les transmissions, il est utilisé un protocole d'accès du type à Multiplexage en Fréquence Variable entre lesdits pinceaux (p₁-p₂₀) et à accès multiple par différence de code synchrone, à séquence directe, à l'intérieur de ces pinceaux (p₁-p₂₀).

12. Procédé selon l'une quelconque des revendications 1 à 11, caractérisé en ce que, pour éviter des interférences avec des systèmes de satellites géostationnaires travaillant dans des bandes de fréquences de transmission comprenant lesdites fréquences de transmissions instantanées, il est procédé à la coupure momentanée des pinceaux desdits satellites du réseau illuminant, lors du mouvement de rotation, une zone du globe terrestre (Tₑ) comprise entre deux latitudes de valeurs déterminées, de part et d'autre de l'équateur du globe terrestre.

13. Procédé selon la revendication 12, caractérisé en ce que ladite zone s'étend entre +9° et -9° de latitude.

14. Système pour la mise en oeuvre du procédé de transmission de signaux radioélectriques via un réseau de satellites (Sat₁, Sat₂) entre au moins une station terrestre fixe (ST₁) et des terminaux d'usagers (T₁, T₂) selon l'une quelconque des revendications précédentes, caractérisé en ce que ledit réseau comprend un nombre de satellites au moins égal à six, en ce que ces satellites sont en mouvement sur des orbites circulaires inclinées et équi-réparties, et en ce que l'angle d'inclinaison est égal à 75° et la période nodale sensiblement égale à huit heures sidérales de manière à survoler le même tracé sur la surface du globe terrestre (Tₑ) toutes les vingt quatre heures.

15. Système selon la revendication 14, caractérisé en ce que le nombre de satellites est égal à sept, numérotés 1 à 7, et en ce que les paramètres des orbites desdits satellites numérotés 1 à 7 sont données par le tableau suivant :

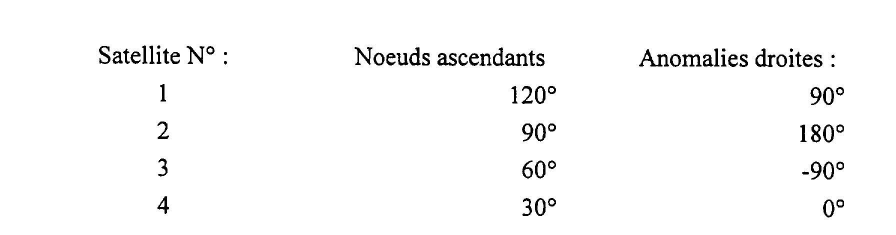

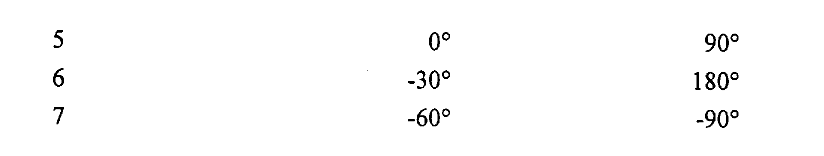

16. Système selon les revendications 14 ou 15, caractérisé en ce que lesdits satellites (Sat₁, Sat₂) et les terminaux d'usagers (T₁, T₂) comprennent des antennes à balayage (1-4, A₁₁, A₁₂) pour réaliser lesdits liens de transmission (l₁).

17. Système selon la revendication 16, caractérisé en ce que les antennes (1-4, A₁₁, A₁₂) sont du type à balayage en fréquence.

18. Système selon la revendication 17, caractérisé en ce que, chacun desdits pinceau (p₁) étant subdivisé en un nombre déterminé de sous-pinceaux (p_{1A}, p_{1B}, p_{1C}), lesdits satellites (Sat₁, Sat₂) comprennent chacun un premier ensemble de N antennes d'émission (11-13) et un second ensemble de N antennes de réception (21-23), N étant égal audit nombre prédéterminé, de manière à établir des communications "aller" et "retour", entre les satellites (Sat₁, Sat₂) et lesdits terminaux d'usagers (T₁, T₂), chaque antenne étant associée à l'un desdits sous-pinceaux (p_{1A}, p_{1B}, p_{1C}), et en ce qu'ils comprennent chacun, en outre, une antenne supplémentaire d'émission (4) et une antenne supplémentaire de réception (3), de manière à établir des communications "aller" et "retour", entre les satellites (Sat₁, Sat₂) et lesdites stations terminales terrestres (ST₁), lesdites antennes étant des antennes à balayage de fréquence.

19. Système selon la revendication 17, caractérisé en ce que lesdits terminaux d'usagers (T₁, T₂) sont munis d'antennes dépliables (A₁₁, A₁₂), en ce que ces terminaux d'usagers (T₁, T₂) prennent deux états distincts, un premier état dit "actif', lorsque lesdites antennes sont dépliées et pendant lequel lesdites liaisons (l₁) peuvent être établies, et un second état, dit "passif', lorsque lesdites antennes sont repliées et pendant lequel les terminaux d'usagers (T₁, T₂) peuvent seulement être appelés, et en ce que lesdites antennes (A₁₁, A₁₂) sont des antennes à balayage de fréquence.

20. Système selon la revendication 19, caractérisé en ce qu'il est prévu deux antennes(A₁₁, A₁₂) disposées chacune sur un support particulier (Sup₁, Sup₂), en ce que ces deux supports sont repliables, l'un contre l'autre, autour d'un axe charnière (Δᵣ), lorsque lesdits terminaux d'usagers sont dans ledit état "passsif', et en ce que les antennes (A₁₁, A₁₂) est destinée, chacune, à recevoir ou à émettre des signaux, en provenance de ou vers un même satellite (Sat₁), lors de commutations inter-pinceaux (p₃, p₂), ou des signaux, en provenance de ou vers deux satellites consécutifs, lors des commutations inter-satellites (Sat₁, Sat₂).

21. système selon les revendications 19 ou 20, caractérisé en ce que lesdits terminaux d'usagers (T₁, T₂) sont mobiles.
